(19) Europäisches Patentamt
European Patent Office
Office européen des brevets

(11) **EP 3 150 558 B1**

(12) **EUROPÄISCHE PATENTSCHRIFT**

(45) Veröffentlichungstag und Bekanntmachung des Hinweises auf die Patenterteilung:
**07.11.2018   Patentblatt 2018/45**

(51) Int Cl.:
***C02F 1/38*** *(2006.01)*          *C02F 103/44* *(2006.01)*

(21) Anmeldenummer: **16002111.9**

(22) Anmeldetag: **30.09.2016**

(54) **VERFAHREN ZUM REINIGEN VON GEBRAUCHTEM WASCHWASSER AUS FAHRZEUGWASCHANLAGEN UND FAHRZEUGWASCHANLAGE**

PROCESS FOR CLEANING USED WASH WATER FROM A VEHICLE WASH FACILITY AND VEHICLE WASH FACILITY

PROCÉDÉ DU NETTOYAGE DES EAUX DE LAVAGE USÉES PROVENANT D'UNE INSTALLATION DE LAVAGE DES VÉHICULES ET INSTALLATION DE LAVAGE DES VÉHICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2015   DE 102015012695**
**30.11.2015   DE 102015015285**

(43) Veröffentlichungstag der Anmeldung:
**05.04.2017   Patentblatt 2017/14**

(73) Patentinhaber: **Mr. Wash Autoservice AG**
**45143 Essen (DE)**

(72) Erfinder: **ENNING, Raoul**
**40489 Düsseldorf (DE)**

(74) Vertreter: **Von Rohr Patentanwälte Partnerschaft mbB**
**Rüttenscheider Straße 62**
**45130 Essen (DE)**

(56) Entgegenhaltungen:
WO-A1-01/21537          DE-A1- 19 500 131
FR-A1- 2 981 926          US-A- 4 097 379
US-A1- 2004 192 980

**Beschreibung**

Die Erfindung betrifft ein Verfahren zum Reinigen von gebrauchtem Waschwasser aus Fahrzeugwaschanlagen und eine Fahrzeugwaschanlage mit einer entsprechend ausgebildeten Vorrichtung.

In der US 4,097,379 A ist eine selbstreinigende Filtervorrichtung zum Reinigen von Brauchwasser einer Autowaschanlage beschrieben. Das Brauchwasser wird dabei durch einen Filter geleitet. Der Filter ist auf einer Löcher aufweisenden Trommel befestigt. Das Brauchwasser wird durch die Trommel geleitet, wobei eine Trennung der Feststoffe am Filter erfolgt. Am Filter bildet sich ein Filterkuchen. Ein Schaber ist derart tangential an der Trommel angeordnet, das der sich außerhalb des Filters sammelnde Filterkuchen bedingt durch die gleichmäßige Drehung der Trommel automatisch abgetragen wird.

Die DE 195 00 131 A1 offenbart eine Anlage zum Reinigen von gebrauchtem Waschwasser aus Fahrzeugwaschanlagen. Zur Partikelabscheidung weist die Anlage als Reinigungsvorrichtung eine nicht näher definierte Zentrifuge auf.

Aus der US 2004/192980 A1 ist ein Prozess bekannt, bei dem Abfallprodukte mit geringem kalorischen Wert umgewandelt werden zu nützlichen, energetisch höherwertigen Produkten, wie beispielsweise Gas, Öl und fester Kohlenstoff. Zum Trennen von kleinen Festkörpern, die in Wasser gelöst sind, wird in dem Prozess eine Zentrifuge verwendet. Die Trommel der Zentrifuge weist kleine Perforationen auf, die zum Abtrennen der Partikel verwendet werden.

Ein Verfahren zur Aufbereitung von Brauchwasser einer Autowaschanlage ist auch in der WO 01/21537 A1 offenbart. Eine Zentrifuge dient hierbei als Trenneinrichtung, um Öl und Feststoffe von Wasser abzutrennen.

Die FR 2981926 A1 offenbart ein Verfahren zur Reinigung von Brauchwasser einer Autowaschanlage. Zum Abtrennen von Feststoffen wird eine Zentrifuge verwendet, die ähnlich einer Kreiselpumpe funktioniert. Innerhalb der Trennkammer ist mittig eine rotierende Trommel angeordnet. Die Trommel dient lediglich zur Energieübertragung in das Fluid. Die dichteren, abzuscheidenden Feststoffe werden an die äußere Wand der Trennkammer gedrückt und können dort entnommen werden.

In Waschanlagen für Kraftfahrzeuge, insbesondere bei Waschstraßen, die fortlaufend durchfahren werden und bei denen eine wesentlich größere Wassermenge umgewälzt wird, fallen in der jeweiligen Waschzone in großen Mengen Schmutzpartikel an, die sich aus groben Partikeln, wie beispielsweise Sand, und aus feineren Partikeln zusammensetzen, die z.B. aus niedergeschlagenem Staub, Abrieb und dergleichen bestehen.

Um Frischwasser einzusparen und das öffentliche Abwassernetz möglichst wenig zu belasten, ist es seit einiger Zeit üblich, das Abwasser bzw. Brauchwasser von Fahrzeugwaschanlagen aufzubereiten und wiederzuverwenden. Dazu müssen die im Brauchwasser enthaltenen Schmutzpartikel möglichst weitgehend entfernt werden, so dass in dem aufbereiteten Brauchwasser nur noch Schmutzpartikel sehr kleiner Größe enthalten sind. Größere Schmutzpartikel könnten bei Wascheinrichtungen, die mit rotierenden Bürsten oder rotierenden Tüchern arbeiten, Kratzer in der Lackoberfläche verursachen und eine ähnlich abbrasive Wirkung entfalten, wie Scheuersand. Ein Ausfall der Aufbereitungstechnologie führt zu höheren Betriebskosten der Fahrzeugwaschanlage und kann im schlimmsten Fall einen Stillstand der Waschanlage bedingen.

Zur Abscheidung von Partikeln aus Waschwässern von Fahrzeugwaschanlagen kommen üblicherweise mechanische Trennapparate zum Einsatz, wobei Partikel beispielsweise mit Filtern, Siebtrommeln oder Zentrifugen vom Brauchwasser abgetrennt werden. Zum Trennen von Schlämmen in eine feste und in eine flüssige Fraktion werden zentrifugal betriebene Filter verwendet. Eine Zentrifugalfilter-Ausgestaltungsform ist die so genannte Korbzentrifuge, die aus einem perforierten, zylindrischen Behälter, besteht, der um eine vertikale Achse dreht. Die innere Oberfläche des Behälters ist mit einem austauschbaren Filtertuch ausgelegt, in welchem die Festkörper zurückgehalten werden, wohingegen die Flüssigkeit aufgrund der Zentrifugalkraft durch das Tuch getrieben wird. Die Arbeitsweise ist chargenweise, d.h. die zugeführte Aufschlämmung muss periodisch unterbrochen werden, um die Entfernung der Festkörper, die sich an dem Filtertuch angesammelt haben, mittels einer Kratzklinge oder dergleichen zu ermöglichen. Alternativ ist eine Rückspülung der Zentrifuge möglich, um einen gebildeten Filterkuchen zu entfernen. Der Betrieb von Korbzentrifugen hat aufgrund der chargenweisen Arbeitsweise und aufgrund von Einschränkungen bezüglich der Entfernung des gebildeten Filterkuchens Nachteile. Konstruktive Möglichkeiten, die Festkörper bei solchen Trennapparaten kontinuierlich zu entfernen und damit eine kontinuierliche Betriebsweise zu ermöglichen, sind aufwendig und störanfällig, was zu Betriebsstörungen bei der Brauchwasserreinigung führen kann und höhere Apparatekosten bedingt, insbesondere bei großen zu reinigenden Brauchwassermengen, wie sie bei Fahrzeugwaschanlagen üblicherweise anfallen.

Aufgabe der vorliegenden Erfindung ist es, ein Verfahren zum Reinigen von gebrauchtem Waschwasser aus Fahrzeugwaschanlagen und eine Fahrzeugwaschanlage mit einer Vorrichtung zum Reinigen der Waschwässer zur Verfügung zu stellen, mit denen eine kontinuierliche Waschwasseraufbereitung kostengünstig durchführbar ist und deren Anwendung einen störungsfreien Betrieb der Fahrzeugwaschanlage weitgehend unabhängig von der Auslastung ermöglicht.

Die vorgenannte Aufgabe wird durch ein Verfahren mit den Merkmalen von Anspruch 1 und durch eine Vorrichtung mit den Merkmalen von Anspruch 6 gelöst. Vorteilhafte Ausgestaltungen der Erfindung sind Gegenstand der Unteransprüche.

Erfindungsgemäß wird ein Verfahren zum Reinigen von gebrauchtem Waschwasser aus Fahrzeugwaschanlagen durch Partikelabscheidung vorgeschlagen, wobei eine Reinigungsvorrichtung für Brauchwasser vorgesehen ist, die wenigstens eine in einem Gehäuse drehbar angeordnete Trommel, wenigstens einen in das Gehäuse außerhalb der Trommel mündenden Brauchwasserzulauf, wenigstens einen aus der Trommel ableitenden Brauchwasserablauf, wenigstens einen außerhalb der Trommel angeordneten Gehäuseauslass zur Partikelabfuhr aus dem Gehäuse und einen Drehantrieb für die Trommel aufweist. Die Trommel weist eine Mehrzahl von Öffnungen auf, wobei die Drehzahl der Trommel und das Druckniveau von dem Gehäuse über den Brauchwasserzulauf unter Überdruck zugeführtem partikelreichem Brauchwasser derart eingestellt werden, dass Brauchwasser über die Öffnungen in die Trommel eintritt und Partikel aufgrund der Drehung der Trommel mit mehrfacher g-Kraft an einem Eintritt in die Trommel über die Öffnungen gehindert werden. Aufgrund der Drehung der Trommel wirken g-Kräfte von wenigstens 300 g auf die Partikel ein. Vorzugsweise wird durch die Drehung der Trommel eine partikelfreie Zone im Nahfeldbereich der Trommel ausgebildet, wobei der Nahfeldbereich eine Breite von wenigstens 0,5 mm, vorzugsweise von wenigstens 1 cm, weiter vorzugsweise von wenigstens 2 cm aufweisen kann. Im Nahfeldbereich sind dann aufgrund der auf die Partikel wirkenden g-Kräfte im Wesentlichen keine abscheidungsfähigen Partikel enthalten, was u.a. von der Drehzahl der Trommel und dem Druckniveau des unter Überdruck zugeführtem partikelreichen Brauchwassers abhängt.

Das erfindungsgemäße Verfahren sieht vor, dass partikelhaltiges Brauchwasser unter Überdruck einer zentrifugalbetriebenen rotierenden Trommel zugeführt und über Öffnungen der Trommel ungehindert in die Trommel eintritt, wobei Partikel aufgrund der Rotation der Trommel an einem Eintritt in die Trommel über die Öffnungen gehinderten werden.

Die erfindungsgemäße Waschanlage weist eine zur Waschwasseraufbereitung ausgebildete Vorrichtung mit wenigstens einer in einem Gehäuse drehbar angeordneten Trommel auf, mit wenigstens einem in das Gehäuse außerhalb der Trommel mündenden Brauchwasserzulauf, mit wenigstens einem aus der Trommel ableitenden Brauchwasserablauf, mit wenigstens einem außerhalb der Trommel angeordneten Gehäuseauslass zur Partikelabfuhr aus dem Gehäuse und mit einem Drehantrieb für die Trommel. Die Trommel weist eine Mehrzahl von Öffnungen auf, wobei die Drehzahl der Trommel und das Druckniveau von über den Brauchwasserzulauf zugeführtem partikelreichen Brauchwasser derart einstellbar sind, dass das Brauchwasser über die Öffnungen in die Trommel eintritt, während Partikel aufgrund der Drehung der Trommel mit vielfacher g-Kraft an einem Eintritt über die Öffnungen in die Trommel gehindert werden.

Bei der erfindungsgemäßen Lösung ist die Trommel zentrifugalbetrieben, d.h. auf Partikel im Brauchwasser wirken hohe g-Kräfte, die verhindern, dass Partikel mit dem Brauchwasser über die Öffnungen der Trommel in die Trommel eintreten und über den Brauchwasserablauf aus der Trommel abgeführt werden. Stattdessen kommt es zu einer Partikelanreicherung im Brauchwasser außerhalb der Trommel, wobei die Partikelabfuhr über den Gehäuseauslass erfolgt, vorzugsweise mit einer bestimmten Menge des mit Partikel angereichten Brauchwassers. In diesem Zusammenhang kann vorgesehen sein, dass weniger als 10% des zugeführten Brauchwassers, vorzugsweise weniger als 5% des Brauchwassers, mit den Partikeln über den Gehäuseauslass abgeführt werden. Das in die Öffnungen der Trommel eintretende partikelärmere Brauchwasser wird dagegen über den Brauchwasserablauf aus der Trommel und damit aus dem Gehäuse abgeleitet.

Das erfindungsgemäße Verfahren und die erfindungsgemäße Vorrichtung ermöglichen eine kostengünstige und wirkungsvolle Reinigung von gebrauchtem Waschwasser aus Fahrzeugwaschanlagen, wobei eine kontinuierliche Arbeitsweise möglich ist bei gleichzeitig einfacher konstruktiver Ausgestaltung der erfindungsgemäßen Vorrichtung. Die erfindungsgemäße Vorrichtung zeichnet sich aufgrund der einfachen Konstruktion durch eine geringe Störanfälligkeit und hohe Bauteilstabilität auch bei großen Partikelmengen im Brauchwasser aus, was zu einer hohen Betriebssicherheit des erfindungsgemäßen Reinigungsverfahrens führt. Der einfache konstruktive Aufbau der Vorrichtung führt zu geringeren Herstellungskosten und lässt einen wirtschaftlichen Betrieb der Wasserreinigung auch bei redundanter Verfahrensführung mit mehreren parallel oder in Reihe geschalteten erfindungsgemäßen Vorrichtungen zu. Durch Parallelschaltung der erfindungsgemäßen Vorrichtungen lassen sich auch große Brauchwassermengen reinigen. Die Abscheidung von Partikeln kann rein mechanisch erfolgen, d.h. frei von Hilfsstoffen, wie Beflockungsmitteln. Der Einsatz von Hilfsstoffen ist grundsätzlich jedoch nicht ausgeschlossen.

Die Öffnungen in der Trommel dienen lediglich als Durchströmungsöffnungen für das Brauchwasser. Die Öffnungsweite der Öffnungen ist dabei ausreichend groß dimensioniert, wobei Partikel nicht aufgrund der Partikelgröße an der Trommel zurückgehalten werden. Ein die Öffnungen verschließendes Filtersieb oder Filtermedium ist nicht vorgesehen. Damit kommt es auch zu keiner Filterkuchenbildung an der Außenseite der Trommel. Die Durchströmungsöffnungen der Trommel weisen in diesen Zusammenhang eine minimale Öffnungsweite von größer als 2 mm, insbesondere von größer 5 mm auf. Mit anderen Worten ausgedrückt bedeutet dies, dass die Öffnungsweite der Trommelöffnungen deutlich größer ist als die Partikelgröße der abzuscheidenden im Brauchwasser enthaltenen Partikel. Da sich außen an der Trommel kein Filterkuchen bildet, ergibt sich gegenüber den aus dem Stand der Technik bekannten Korbzentrifugen, die für die Abscheidung des Filterkuchens Abscheidewerkzeuge, wie Kratzmesser oder dergleichen, benötigen, ein deutlich vereinfachter konstruktiver Aufbau der erfindungsgemäße Vorrichtung. Die erfindungsgemäße Vorrichtung ist daher auch wenig störanfällig.

Um eine ausreichend hohe Abscheideleistung für Partikel zu erreichen, wird die Drehzahl der Trommel vorzugsweise so gewählt, dass Beschleunigungskräfte bzw. Zentrifugalkräfte zwischen 300 g und 1.000 g, weiter vorzugsweise von ca. 500 g, auf die Partikel einwirken. Die g-Kräfte können bei entsprechend höherer Drehzahl der Trommel auch größer als 1000 g sein. Der Zusammenhang zwischen der Drehzahl der Trommel und der Höhe der g-Kraft, die auf die Partikel wirkt, lässt sich in diesem Zusammenhang näherungsweise auf der Grundlage der nachfolgend angegebenen Gleichung (I) ermitteln:

$$\text{g-Kraft} = 1{,}118 \cdot 10^{-5} \cdot r \cdot rpm^2 \quad (I)$$

mit

r     = Rotationsradius der Trommel in [cm]
rpm   = Drehzahl der Trommel in [U/min]

Für eine ausreichend gute Abscheideleistung liegt die Drehzahl der Trommel vorzugsweise im Bereich zwischen 1000 U/min und 3000 U/min, weiter vorzugsweise zwischen 1500 U/min und 2000 U/min, besonders bevorzugt bei ca. 1500 U/min.

Um sicherzustellen, dass das Brauchwasser entgegen der Zentrifugalkraft in die Trommel eintreten kann, wird das Brauchwasser mit einem Absolutdruck zwischen 3 bar und 10 bar, weiter vorzugsweise zwischen 4 bar und 6 bar, besonders bevorzugt von ca. 5 bar, dem Gehäuse zugeführt. Die Brauchwasserzuführung zu dem Gehäuse erfolgt mit einer Pumpe, wobei der Druckverlust zwischen dem Brauchwassereintritt in das Gehäuse und dem Brauchwasseraustritt aus der Trommel vorzugsweise weniger als 1 bar, insbesondere weniger als 0,5 bar, betragen kann. Die erfindungsgemäße Vorrichtung ist dazu geeignet, Partikel bis zu einer Größe von 100 $\mu$m, vorzugsweise von 10 $\mu$m, weiter vorzugsweise von 1 $\mu$m, aus dem Brauchwasser abzuscheiden. Dementsprechend kann die maximale Partikelgröße im über den Brauchwasserablauf aus der Trommel angeleiteten Brauchwasser weniger als 100 $\mu$m, vorzugsweise weniger als 10 $\mu$m, besonders bevorzugt weniger als 1 $\mu$m, betragen.

Dem Brauchwasserzulauf kann ein Partikelvorabscheider, insbesondere ein Siebfilter, vorgeschaltet sein. Dementsprechend kann die maximale Partikelgröße in dem dem Gehäuse zugeführten Brauchwasser weniger als 1 mm, vorzugsweise weniger als 600 $\mu$m, weiter vorzugsweise weniger als 400 $\mu$m betragen (Trennschnitt).

Die erfindungsgemäße Vorrichtung ist aufgrund der konstruktiven Ausgestaltung zur Wasserreinigung von Brauchwasservolumenströmen in der Größenordnung zwischen 1 m³/h bis 10 m³/h, vorzugsweise zwischen 5 m³/h bis 8 m³/h, weiter vorzugsweise von ca. 7,5 m³/h, geeignet. Höhere Brauchwasservolumenströme lassen sich bei redundanter Verfahrensführung mit mehreren parallel betriebenen erfindungsgemäßen Trennvorrichtungen erreichen.

Ein Außenmantel der Trommel kann durch ein Lochblech, ein Drahtgewebe, ein Metallgitter oder gewendelte Metallstäbe gebildet werden. Der Außenmantel kann zusammen mit einem Trommelboden und einer Trommeldecke einen zylindrischen Rotationskörper bilden, in den das Brauchwasser über die Trommelöffnungen ungehindert eintreten kann. Wesentlich ist, dass die Trommelöffnungen in dem Außenmantel eine ausreichend große Öffnungsweite aufweisen, um eine Filterkuchenbildung an der Außenseite der Trommel zu verhindern.

In dem Gehäuse kann wenigstens eine vorzugsweise rinnenförmige Vertiefung zur Radiuserweiterung des Gehäuses und als Partikelsammler vorgesehen sein. Insbesondere kann die Vertiefung als Sammelrinne ausgebildet sein, wobei Partikel aufgrund der Zentrifugalkräfte in radialer Richtung nach außen wandern und es zu einer Aufkonzentration von Partikeln am Innenrand des Gehäuses und insbesondere im Bereich der Vertiefung kommt. Das Gehäuse kann eine zylindrische Außenwand aufweisen, wobei der Rinnenboden der Sammelrinne dann in radialer Richtung ganz außen liegt, so dass sich im Bereich der Sammelrinne die größte Partikelkonzentration einstellt. Die Sammelrinne kann sich vorzugsweise parallel zur Rotationachse der Trommel erstrecken, kann aber auch schräg zur Rotationsachse verlaufen. Vorzugsweise können wenigstens zwei gegenüberliegend angeordnete Sammelrinnen vorgesehen sein. Zur Abfuhr der Partikel aus dem Bereich der Vertiefung kann ein Gehäuseauslass im Bereich der Vertiefung münden, wobei der Gehäuseauslass insbesondere im Gehäuseboden vorgesehen ist.

Bei einer weiter bevorzugten Ausführungsform kann die Trommel über eine Welle angetrieben werden. Die Ableitung von Brauchwasser aus der Trommel kann über eine Hohlwelle erfolgen, wobei die Hohlwelle im Innenbereich der Trommel Öffnungen aufweisen kann, über die das Brauchwasser aus der Trommel in die Hohlwelle eintritt und dann über die Hohlwelle aus der Trommel abgeführt wird.

Die Rotationsachse der Trommel kann grundsätzlich senkrecht zum Boden oder in einer beliebigen Schrägstellung zum Boden verlaufen. Bei einer bevorzugten Ausführungsform der Erfindung ist die Rotationsachse der Trommel jedoch in eine horizontale Ebenen gelegt, so dass sich die Trommel in einer liegenden Position befindet. Unabhängig davon, ob die Trommel in stehender oder in liegender Position angeordnet ist, d.h. unabhängig davon, ob die Rotationsachse vertikal zum Boden verläuft oder in eine horizontale Ebene gelegt ist, erfolgt die Brauchwasserzufuhr in das die Trommel aufnehmende Gehäuse und die Brauchwasserabfuhr aus dem Gehäuse sowie die Partikelabfuhr aus dem Gehäuse jeweils vorzugsweise über die senkrecht zur Rotationsachse der Trommel angeordneten äußeren Begrenzungswände des Gehäuses.

Die obige Beschreibung sowie weitere Einzelheiten, Merkmale und Vorteile der vorliegenden Erfindung ergeben sich unter Bezug auf die nachfolgende Beschreibung einer bevorzugten, jedoch nicht als einschränkend zu verstehenden Ausführungsform einer erfindungsgemäßen Vorrichtung in Zusammenschau mit den beigefügten Zeichnungen, in der

Fig. 1 eine schematische Querschnittsansicht einer Vorrichtung zum Reinigen von Waschwasser durch Partikelabscheidung bei einer erfindungsgemäßen Fahrzeugwaschanlage,

Fig. 2 eine perspektivische Ansicht einer zur Partikelabscheidung bei der Vorrichtung aus Fig. 1 eingesetzten Trommel und

Fig. 3 eine perspektivische Ansicht des Gehäuses der Vorrichtung aus Fig. 1

zeigt.

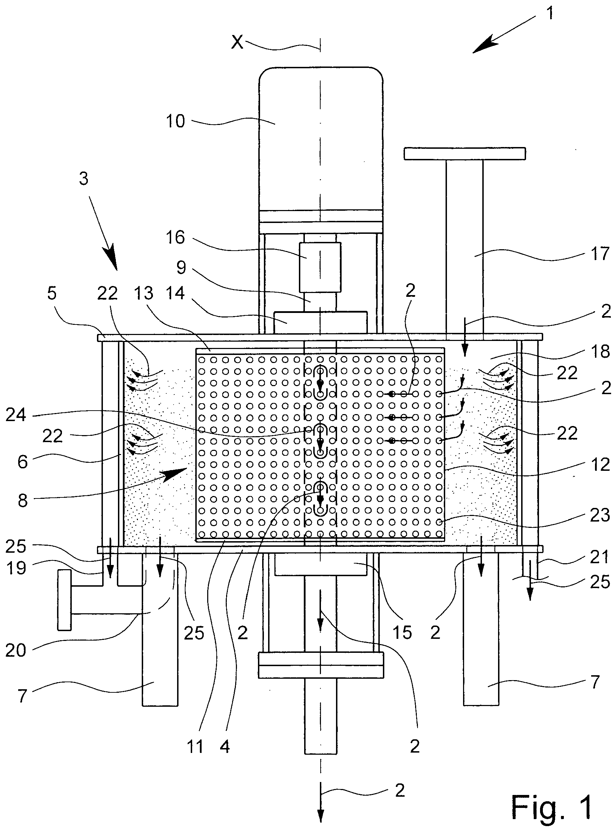

In Fig. 1 ist eine Vorrichtung 1 zum Reinigen von gebrauchtem Waschwasser bzw. Brauchwasser 2 an Fahrzeugwaschanlagen durch Partikelabscheidung gezeigt. Die Vorrichtung 1 weist ein Gehäuse 3 auf, dass durch einen Gehäuseboden 4, einen Gehäusedeckel 5 und einen Gehäusemantel 6 gebildet wird. Das Gehäuse 3 steht über Standfüße 7 auf einem Untergrund auf.

In dem Gehäuse 3 ist eine Trommel 8 angeordnet, die mit einer Hohlwelle 9 drehfest verbunden ist. Über einen Motor 10 lässt sich die Hohlwelle 9 und damit die Trommel 8 in eine Rotationsbewegung um die Rotationsachse X versetzen. Die Trommel 8 wird gebildet durch einen geschlossenen Trommelboden 11, einen perforierten Trommelmantel 12 und einen geschlossenen Trommeldeckel 13. Die Hohlwelle 9 ist über zwei Lager 14, 15 an dem Gehäuse 3 drehbar gelagert und über eine Kupplung 16 mit dem Motor 10 verbunden.

Außerhalb der Trommel 8 mündet eine Zulaufleitung 17 in das Gehäuse 3, über die partikelreiches Brauchwasser 2 in einen Innenbereich 18 des Gehäuses 3 eingeleitet wird. Der Brauchwasserzulauf erfolgt gegenüber dem Trommelmantel 12 in radialer Richtung nach außen versetzt von oben über den Gehäusedeckel 5.

In dem Gehäuseboden 4 sind mehrere Auslassöffnungen vorgesehen, die über Auslassleitungen 19, 20, 21 eine Partikelabfuhr aus dem Gehäuse 3 ermöglichen. Hierbei sind die Auslassöffnungen 19, 20 mit einer Auslassleitung 22 verbunden-Nicht dargestellt ist, dass die in Fig. 1 radial rechts außen liegende Auslassleitung 21 ebenfalls mit der Auslassleitung 20 verbunden sein kann. Ebenso gut ist es möglich, dass weitere nicht gezeigte Auslassöffnungen im Gehäuseboden 4 vorgesehen sind, um eine Partikelabfuhr aus dem Gehäuse 3 zu ermöglichen. Die Auslassöffnungen 19, 20, 21 sind in radialer Richtung vorzugsweise möglichst weit außenliegend angeordnet, da es in diesem Bereich zur Aufkonzentration von Partikeln bei der Wasserreinigung kommt.

Die Partikelabscheidung aus dem Brauchwasser 2 erfolgt wie nachfolgend beschrieben. Das partikelreiche Brauchwasser 2 wird bei einem bestimmten Überdruck (Absolutdruck) von beispielsweise 5 bar in den Innenbereich 18 des Gehäuses 3 und damit außerhalb der Trommel 8 in das Gehäuse 3 eingeleitet. Zur Einstellung eines entsprechenden Druckniveaus des Brauchwassers 2 ist eine in Fig. 1 nicht dargestellte Pumpe vorgesehen. Für die Partikelabscheidung wird die Hohlwelle 9 und damit die Trommel 8 mit dem Drehantrieb 10 in eine Drehbewegung gebracht, wobei die Drehzahl der Trommel 8 beispielsweise bei ca. 1500 U/min liegt. Aufgrund der Drehung der Trommel 8 wirken auf die Partikel im Brauchwasser 2 sehr hohe g-Kräfte, die dazu führen, dass die Partikel in radialer Richtung nach außen gedrängt werden. Die Partikelkonzentration im Brauchwasser 2 nimmt also außerhalb der Trommel 8 in radialer Richtung zur Innenseite des Gehäusemantels 6 hin zu. Dies ist in Fig. 1 durch Pfeile 22 schematisch dargestellt. Der Gehäusemantel 6 kann vorzugsweise zylindrisch ausgebildet sein.

Durch die Bewegung der Partikel in radialer Richtung nach außen kommt es zu einer Partikelabreicherung im Brauchwasser 2 im Nahbereich der Trommel 8, so dass partikelärmeres Brauchwasser 2 über Öffnungen 23 in dem Trommelmantel 12 in die Trommel 8 eintritt. Die Öffnungen 23 sind nach außen frei und nicht durch ein Filtermedium über- oder unterlagert. Von hier aus gelangt das Brauchwasser 2 über Öffnungen 24 der Hohlwelle 9 in die Hohlwelle 9 und wird über die Hohlwelle 9 nach außen abgeführt. Aufgrund der Öffnungsweite der Öffnungen 23 im Trommelmantel 12, die deutlich größer als der Durchmesser der Partikel im Brauchwasser 2 ist, wird sichergestellt, dass es beim Brauchwassereintritt in die Trommel 8 nicht zu einer Filterkuchenbildung auf der Außenseite der Trommel 8 kommt. Die Öffnungen 23 im Trommelmantel 12 können in diesem Zusammenhang einen Durchmesser von 5 mm oder mehr aufweisen.

Der Trennschritt bei der Partikelabscheidung kann bei einer Partikelgröße von weniger als 100 $\mu$m, vorzugsweise weniger als 10 $\mu$m, weiter vorzugsweise von weniger als 1 $\mu$m, liegen. Nicht dargestellt ist im Übrigen, dass der Vorrichtung 1 ein Partikelvorabscheider vorgeschaltet sein kann, um sicherzustellen, dass die maximale Partikelgröße im dem dem Gehäuse 3 zugeführten partikelreichen Brauchwasser 2 weniger als 1 mm, vorzugsweise weniger als 600 $\mu$m, weiter vorzugsweise weniger als 400 $\mu$m, beträgt. Mit der Vorrichtung 1 lassen sich Brauchwasservolumenströme von vorzugsweise 1 m³/h bis 10 m³/h reinigen.

Die Partikelabfuhr erfolgt über die mit den Auslassleitungen 19, 20 und 21 verbundenen Auslassöffnungen im Bereich des Gehäusebodens 4. Vorzugsweise erfolgt die Partikelabfuhr zusammen mit einer bestimmten Menge von Brauchwasser 2, so dass ein aufkonzentrierter Partikelstrom 25 abgeführt wird. In diesem Zusammenhang können vorzugsweise weniger als 10 Gew.-%, insbesondere weniger als 5 Gew.-%, des über die Zulaufleitung 17 zugeführten nicht gereinigten Brauchwassers 2 zusammen mit den Partikeln über die Auslassleitungen 19, 20 und 21 abgeführt werden. Die Volumenströme können über nicht dargestellte Ablassventile eingestellt und gesteuert werden. Der Partikelstrom 25 kann einer weiteren Wasseraufbereitung zugeführt werden.

Das Gehäuse 3 und die Trommel 8 sowie alle mit dem Brauchwasser 2 in Kontakt kommende Bauteile der Vorrichtung 1 bestehen vorzugsweise aus Edelstahl.

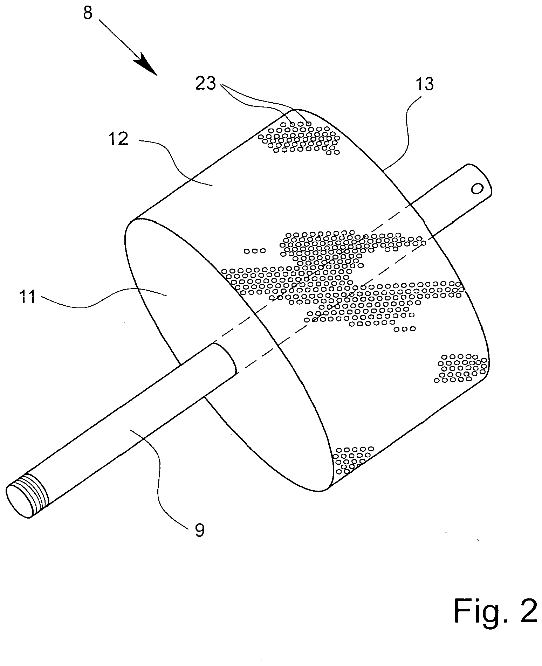

In Fig. 2 ist schematisch die Trommel 8 dargestellt. Der Trommelmantel 12 wird bei der gezeigten Ausführungsform durch ein Lochblech gebildet, dass über die gesamte Umfangsfläche perforiert ist. Die Öffnungen 23 können einen Durchmesser von 5 mm oder mehr aufweisen,

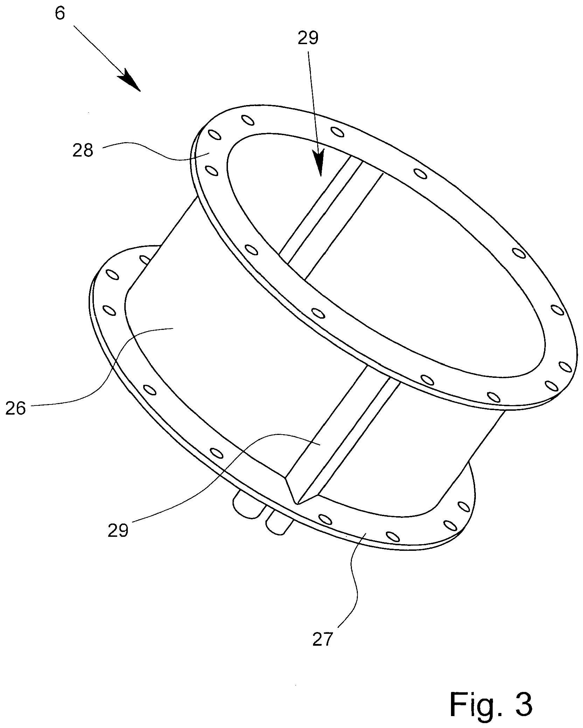

Fig. 3 zeigt den Gehäusemantel 6 des Gehäuses 3 in einer perspektivischen Ansicht. Der Gehäusemantel 6 weist einen zylindrischen Wandabschnitt 26 auf, der zur Verbindung mit dem Gehäuseboden 4 und dem Gehäusedeckel 5 zwei Flanschabschnitte 27, 28 aufweist. Im Übrigen sind auf gegenüberliegenden Seiten des Wandabschnitts 26 Sammelrinnen 29 vorgesehen. Die Sammelrinnen 29 wirken als Partikelsammler, die sich parallel zur Rotationsachse X der Trommel 8 erstrecken. Im Bereich der Sammelrinnen 29 kommt es zu einer Radiuserweiterung des Wandabschnitts 26, wobei ein Rinnenboden 30 der jeweiligen Sammelrinne 29 in radialer Richtung ganz außen liegt. Im Bereich der Sammelrinnen 29 stellt sich bei der Partikelabscheidung die höchste Partikelkonzentration ein. Es ist daher vorgesehen, die mit den Auslassleitungen 19, 21 (Fig. 1) verbundenen Auslassöffnungen im Behälterboden 4 in radialer Richtung unterhalb der Sammelrinnen 29 anzuordnen. Über die Auslassleitungen 19, 21 erfolgt dann der Partikelaustrag aus dem Bereich der Sammelrinnen 29.

Die Figuren 1 bis 3 zeigen die Vorrichtung 1 bei stehender Anordnung der Trommel 8. Hierbei verläuft die Rotationsachse X vertikal zum Boden. Bevorzugt kann aber eine Ausführungsform sein, bei der sich die Trommel 8 in liegender Position befindet, wobei sich die Trommel 8 dann um eine horizontale Rotationsachse X dreht. Bei beiden Ausführungsformen erfolgt die Brauchwasserzufuhr in das Gehäuse 3 bzw. die Brauchwasserabfuhr und die Partikelabfuhr aus dem Gehäuse 3 jeweils über die senkrecht zur Rotationsachse X angeordneten äußeren Begrenzungswände des Gehäuses 3. Bei stehender Anordnung der Vorrichtung 1 erfolgt somit der Brauchwasserzulauf über den Gehäusedeckel 5 und der Brauchwasserablauf bzw. die Partikelabfuhr über den Gehäuseboden 4. Bei liegender Anordnung der Trommel 8 erfolgt die Brauchwasserzufuhr in das Gehäuse 3 und die Brauchwasserabfuhr aus dem Gehäuse 3 sowie, vorzugsweise, die Partikelabfuhr über die äußeren seitlichen Begrenzungswände des Gehäuses 3. Brauchwasserzufuhr und -abfuhr sowie Partikelabfuhr erfolgen damit vorzugsweise in axialer Richtung parallel zur Rotationsachse X. Grundsätzlich ist es aber auch möglich, dass die Brauchwasserzufuhr und/oder Brauchwasserabfuhr und/oder Partikelabfuhr in bzw. aus dem Gehäuse 3 über die radiale Mantelfläche des Gehäuses 3 bzw. den Gehäusemantel 6 erfolgt, und damit quer zur Rotationsachse X der Trommel 8.

Im Übrigen ist nicht dargestellt, dass das Gehäuse 3 wenigstens eine Entlüftungsöffnung und/oder Entlüftungsleitung aufweisen kann, um den Innenraum des Gehäuses 3 zu entlüften. Die Entlüftung kann vorzugsweise über den Behälterdeckel 5 und/oder den Behälterboden 4 erfolgen. Auch eine Entlüftung über die Mantelfläche des Gehäuses 3 ist grundsätzlich möglich.

**Bezugszeichenliste:**

| 1 | Vorrichtung | 17 | Zulaufleitung |
|---|---|---|---|
| 2 | Brauchwasser | 18 | Innenbereich |
| 3 | Gehäuse | 19 | Auslassleitung |
| 4 | Gehäuseboden | 20 | Auslassleitung |
| 5 | Gehäusedeckel | 21 | Auslassleitung |
| 6 | Gehäusemantel | 22 | Pfeil |
| 7 | Standfuß | 23 | Öffnung |
| 8 | Trommel | 24 | Öffnung |
| 9 | Hohlwelle | 25 | Partikelstrom |
| 10 | Drehantrieb | 26 | Wandabschnitt |
| 11 | Trommelboden | 27 | Flanschabschnitt |
| 12 | Trommelmantel | 28 | Flanschabschnitt |
| 13 | Trommeldeckel | 29 | Sammelrinne |
| 14 | Lager | 30 | Rinnenboden |
| 15 | Lager | | |
| 16 | Kupplung | | |

**Patentansprüche**

1. Verfahren zum Reinigen von gebrauchtem Waschwasser (2) aus Fahrzeugwaschanlagen durch Partikelabscheidung mit einer Reinigungsvorrichtung (1) für Brauchwasser (2), wobei die Reinigungsvorrichtung (1) wenigstens eine in einem Gehäuse (3) drehbar angeordnete Trommel (8), wenigstens einen in das Gehäuse (3) außerhalb der Trommel (8) mündenden Brauchwasserzulauf, wenigstens einen aus der Trommel (8) ableitenden Brauchwasserablauf, wenigstens einen außerhalb der Trommel (8) angeordneten Gehäuseauslass zur Partikelabfuhr aus dem Gehäuse (3) und einen Drehantrieb (10) für die Trommel (8) aufweist, wobei die Trommel (8) eine Mehrzahl von Öffnungen (23) aufweist, wobei die Drehzahl der Trommel (8) und das Druckniveau von dem Gehäuse (3) über den Brauchwasserzulauf unter Überdruck zugeführtem partikelreichen Brauchwasser (2) derart eingestellt werden, dass Brauchwasser (2) über die Öffnungen (23) in die Trommel (8) eintritt und Partikel aufgrund der Drehung der Trommel (8) mit mehrfacher g-Kraft an einem Eintritt in die Trommel (8) über die Öffnungen (23) gehindert werden, wobei aufgrund der Drehung der Trommel (8) g-Kräfte von wenigstens 300 g auf die Partikel einwirken, wobei das Brauchwasser (2) mit einem Absolutdruck zwischen 3 bar und 10 bar dem Gehäuse (3) zugeführt wird und wobei die minimale Öffnungsweite der Öffnungen (23) der Trommel (8) größer als 2 mm ist.

**2.** Verfahren (1) nach Anspruch 1, **dadurch gekennzeichnet, dass** aufgrund der Drehung der Trommel (8) auf die Partikel wirkende g-Kräfte zwischen 300 g und 1000 g, vorzugsweise von ca. 500 g, erzeugt werden.

**3.** Verfahren (1) nach einem der vorhergehenden Ansprüche, **dadurch gekennzeichnet, dass** die Drehzahl der Trommel (8) auf einen Wert zwischen 1000 U/min und 3000 U/min, vorzugsweise zwischen 1500 U/min und 2000 U/min, weiter vorzugsweise ca. 1500 U/min, eingestellt wird.

**4.** Verfahren (1) nach einem der vorhergehenden Ansprüche, **dadurch gekennzeichnet, dass** das Brauchwasser (2) mit einem Absolutdruck zwischen 3 bar und 10 bar, vorzugsweise zwischen 4 bar und 6 bar, insbesondere von ca. 5 bar, dem Gehäuse (3) zugeführt wird.

**5.** Verfahren (1) nach einem der vorhergehenden Ansprüche, **dadurch gekennzeichnet, dass** durch Einstellung der Drehzahl der Trommel (8) und des Druckniveaus von dem Gehäuse (3) über den Brauchwasserzulauf unter Überdruck zugeführtem partikelreichen Brauchwasser (2) eine Partikelabscheidung bis zu einer Größe von 100 $\mu$m, vorzugsweise von 10 $\mu$m, weiter vorzugsweise von 1 $\mu$m, aus dem Brauchwasser (2) vorgesehen wird.

**6.** Fahrzeugwaschanlage mit einer Vorrichtung (1) zum Reinigen von gebrauchtem Waschwasser der Fahrzeugwaschanlage, wobei die Vorrichtung (1) wenigstens eine in einem Gehäuse (3) drehbar angeordnete Trommel (8), wenigstens einen in das Gehäuse (3) außerhalb der Trommel (8) mündenden Brauchwasserzulauf, wenigstens einen aus der Trommel (8) ableitenden Brauchwasserablauf, wenigstens einen außerhalb der Trommel (8) angeordneten Gehäuseauslass zur Partikelabfuhr aus dem Gehäuse (3) und einen Drehantrieb (10) für die Trommel (8) aufweist, wobei die Trommel (8) eine Mehrzahl von Öffnungen (23) aufweist und wobei die Drehzahl der Trommel (8) und das Druckniveau von dem Gehäuse (3) über den Brauchwasserzulauf zugeführtem partikelreichen Brauchwasser (2) derart einstellbar sind, dass Brauchwasser (2) über die Öffnungen (23) in die Trommel (8) eintritt und Partikel aufgrund der Drehung der Trommel (8) mit mehrfacher g-Kraft an einem Eintritt in die Trommel (8) über die Öffnungen (23) gehindert werden, wobei aufgrund der Drehung der Trommel g-Kräfte von wenigstens 300 g auf die Partikel einwirken, wobei das Brauchwasser (2) mit einem Absolutdruck zwischen 3 bar und 10 bar dem Gehäuse (3) zuführbar ist und wobei die minimale Öffnungsweite der Öffnungen (23) der Trommel (8) größer als 2 mm ist.

**7.** Fahrzeugwaschanlage (1) nach Anspruch 6, **dadurch gekennzeichnet, dass** ein Trommelmantel (12) der Trommel (8) durch ein Lochblech, Drahtgewebe, Metallgitter oder Metallstäbe gebildet wird.

**8.** Fahrzeugwaschanlage (1) nach einem der vorhergehenden Ansprüche 6 oder 7, **dadurch gekennzeichnet, dass** in dem Gehäuse (3) wenigstens eine vorzugsweise rinnenförmige Vertiefung zur Radiuserweiterung und als Partikelsammler vorgesehen ist.

**9.** Fahrzeugwaschanlage (1) nach einem der vorhergehenden Ansprüche 6 bis 8, **dadurch gekennzeichnet, dass** die Trommel (8) drehfest mit einer Hohlwelle (9) verbunden ist, wobei die Ableitung von Brauchwasser (2) aus der Trommel (8) über die Hohlwelle (9) erfolgt.

## Claims

**1.** A method for cleaning used washing water (2) from vehicle washing systems by means of particle separation with a cleaning device (1) for process water (2), wherein the cleaning device (1) has at least one drum (8), rotatably mounted in a housing (3), at least one process water inlet, discharging into the housing (3) outside the drum (8), at least one process water drain, discharging from the drum (8), at least one housing outlet, arranged outside the drum (8) for particle removal from the housing (3), and a rotary drive (10) for the drum (8), wherein the drum (8) has a plurality of openings (23), wherein the rotational speed of the drum (8) and the pressure level of the housing (3) are adjusted by means of the particle-rich process water (2) supplied under excess pressure through the process water inlet such that process water (2) enters the drum (8) through the openings (23) and particles are prevented from entering the drum (8) through the openings (23) due to the rotation of the drum (8) with multiple g-force, wherein, due to the rotation of the drum (8), g-forces of at least 300 g are exerted on the particles, wherein the process water (2) is supplied into the housing (3) with an absolute pressure between 3 bar and 10 bar, and wherein the minimum opening width of the openings (23) of the drum (8) is greater than 2 mm.

2. The method (1) according to claim 1, **characterised in that**, due to the rotation of the drum (8), g-forces acting on the particles are produced between 300 g and 1000 g, preferably of around 500 g.

3. The method (1) according to any one of the preceding claims, **characterised in that** the rotational speed of the drum (8) is adjusted to a value between 1000 U/min and 3000 U/min, preferably between 1500 U/min and 2000 U/min, more preferably around 1500 U/min.

4. The method (1) according to any one of the preceding claims, **characterised in that** the process water (2) is supplied into the housing (3) with an absolute pressure between 3 bar and 10 bar, preferably between 4 bar and 6 bar, particularly of around 5 bar.

5. The method (1) according to any one of the preceding claims, **characterised in that**, by adjusting the rotational speed of the drum (8) and the pressure level of the housing (3) by means of the particle-rich process water (2) supplied under excess pressure through the process water inlet, a particle separation up to a size of 100 $\mu$m, preferably of 10 $\mu$m, more preferably of 1 $\mu$m, from the process water (2) is provided.

6. A vehicle washing system with a device (1) for cleaning used washing water of the vehicle washing system, wherein the device (1) has at least one drum (8), rotatably mounted in a housing (3), at least one process water inlet discharging into the housing (3) outside the drum (8), at least one process water drain discharging from the drum (8), at least one housing outlet arranged outside the drum (8) for particle removal from the housing (3) and a rotary drive (10) for the drum (8), wherein the drum (8) has a number of openings (23) and wherein the rotational speed of the drum (8) and the pressure level of the housing (3) can be set by means of the particle-rich process water (2) supplied through the process water inlet such that process water (2) enters the drum (8) through the openings (23) and particles are prevented from entering the drum (8) through the openings (23) due to the rotation of the drum (8) with multiple g-force, wherein, due to the rotation of the drum, g-forces of at least 300 g are exerted on the particles, wherein the process water (2) can be supplied into the housing (3) with an absolute pressure between 3 bar and 10 bar and wherein the minimum opening width of the openings (23) of the drum (8) is greater than 2 mm.

7. The vehicle washing system (1) according to claim 6, **characterised in that** a drum casing (12) of the drum (8) is formed by a perforated metal plate, wire mesh, metal grating or metal bars.

8. The vehicle washing system (1) according to any one of the preceding claims 6 or 7, **characterised in that**, in the housing (3), at least one preferably trough-shaped recess is provided as a radius extension and particle collector.

9. The vehicle washing system (1) according to any one of the preceding claims 6 to 8, **characterised in that** the drum (8) is rotaionally fixedy connected with a hollow shaft (9), wherein the drainage of process water (2) from the drum (8) occurs via the hollow shaft (9).

## Revendications

1. Procédé pour le traitement d'eaux de lavage usées (2) provenant d'installations de lavage de véhicules, par séparation des particules à l'aide d'un dispositif de nettoyage (1) des eaux usées (2), le dispositif de nettoyage (1) présentant au moins un tambour (8) disposé en rotation dans un carter (3), au moins une arrivée d'eaux usées débouchant dans le carter (3) à l'extérieur du tambour (8), au moins une vidange d'eaux usées évacuées du tambour (8), au moins une sortie de carter disposée à l'extérieur du tambour (8), pour évacuer les particules du carter (3), et un organe d'entraînement rotatif (10) pour le tambour (8), le tambour (8) présentant un grand nombre d'ouvertures (23), la vitesse de rotation du tambour (8) et le niveau de pression des eaux usées (2), riches en particules, arrivant en surpression en provenance du carter (3) en passant par l'arrivée des eaux usées, étant ajusté de telle sorte que les eaux usées (2) pénètrent dans le tambour (8) par les ouvertures (23), et que les particules, du fait de la rotation du tambour (8) avec une accélération de plusieurs g ne puissent passer par les ouvertures (23) pour pénétrer dans le tambour (8) au niveau d'une entrée, des accélérations d'au moins 300 g agissant sur les particules du fait de la rotation du tambour (8), les eaux usées (2) étant envoyées au carter (3) sous une pression absolue située dans l'itervalle allant de 3 bar à 10 bar, et le diamètre minimal des ouvertures (23) deu tambour (8) étant supérieur à 2 mm.

2. Procédé (1) selon la revendication 1, **caractérisé en ce que** la rotation du tambour (8) produit des accélérations agissant sur les particules, situées dans l'intervalle allant de 300 g à 1000 g, de préférence d'environ 500 g.

3.  Procédé (1) selon l'une des revendications précédentes, **caractérisé en ce que** la vitesse de rotation du tambour (8) est ajustée à une valeur située dans l'intervalle allant de 1000 tr/min à 3000 tr/min, de préférence de 1500 tr/min à 2000 tr/min, encore mieux d'environ 1500 tr/min.

4.  Procédé (1) selon l'une des revendications précédentes, **caractérisé en ce que** les eaux usées (2) arrivent au carter (3) sous une pression absolue située dans l'intervalle allant de 3 bar à 10 bar, de préférence de 4 bar à 6 bar, en particulier d'environ 5 bar.

5.  Procédé (1) selon l'une des revendications précédentes, **caractérisé en ce que**, sous l'effet de l'ajustement de la vitesse de rotation du tambour (8) et du niveau de pression des eaux usées (2) riches en particules, amenées en surpression du carter (3) en passant par l'arrivée d'eaux usées, une séparation des particules à partir des eaux usées (2) est réalisée jusqu'à une taille de 100 μm, de préférence de 10 μm, encore mieux de 1 μm.

6.  Installation de lavage de véhicules à l'aide d'un dispositif (1) pour le traitement des eaux usées de l'installation de lavage de véhicules, le dispositif (1) présentant au moins un tambour (8) disposé en rotation dans un carter (3), au moins une arrivée d'eaux usées débouchant dans le carter (3) à l'extérieur du tambour (8), au moins une vidange d'eaux usées évacuées du tambour (8), au moins une sortie de carter disposée à l'extérieur du tambour (8), pour évacuer les particules du carter (3), et un organe d'entraînement rotatif (10) pour le tambour (8), le tambour (8) présentant un grand nombre d'ouvertures (23), la vitesse de rotation du tambour (8) et le niveau de pression des eaux usées (2), riches en particules, arrivant en provenance du carter (3) en passant par l'arrivée des eaux usées, étant ajusté de telle sorte que les eaux usées (2) pénètrent dans le tambour (8) par les ouvertures (23), et que les particules, du fait de la rotation du tambour (8) avec une accélération de plusieurs g, ne puissent passer par les ouvertures (23) pour pénétrer dans le tambour (8) au niveau d'une entrée, des accélérations d'au moins 300 g agissant sur les particules du fait de la rotation du tambour (8), les eaux usées (2) étant envoyées au carter (3) sous une pression absolue située dans l'intervalle allant de 3 bar à 10 bar, et le diamètre minimal des ouvertures (23) du tambour (8) étant supérieur à 2 mm.

7.  Installation (1) de lavage de véhicules selon la revendication 6, **caractérisée en ce qu'**une enveloppe (12) du tambour (8) est formée par une tôle perforée, une toile métallique, un treillis métallique ou des tiges métalliques.

8.  Installation (1) de lavage de véhicules selon l'une des revendications précédentes 6 ou 7, **caractérisée en ce qu'**un renfoncement de préférence en forme de rigole est prévu dans le carter (3), pour élargir le rayon et en tant que collecteur de particules.

9.  Installation (1) de lavage de véhicules selon l'une des revendications précédentes 6 à 8, **caractérisée en ce que** le tambour (8) est relié d'une manière solidaire en rotation à un arbre creux (9), l'évacuation des eaux usées (2) à partir du tambour (8) s'effectuant par l'arbre creux (9).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4097379 A
- DE 19500131 A1
- US 2004192980 A1
- WO 0121537 A1
- FR 2981926 A1